# EUROPÄISCHE PATENTANMELDUNG

(11) **EP 3 399 275 A1**
(43) Veröffentlichungstag der Anmeldung: **07.11.2018**
(21) Anmeldenummer: 17169364.1
(22) Anmeldetag: 04.05.2017
(51) Int. Cl.: G01B 11/245

(54) **POSITIONS- UND ORIENTIERUNGSBESTIMMUNG EINES GEFÖRDERTEN OBJEKTS**

(71) Anmelder: MULTIVAC Sepp Haggenmüller SE & Co. KG, 87787 Wolfertschwenden (DE)
(72) Erfinder: HASCHKA, Marco, 87758 Kronburg (DE); BUCHENBERG, Wolfgang, 87466 Oy-Mittelberg (DE)
(74) Vertreter: Grünecker Patent- und Rechtsanwälte PartG mbB

(57) **Zusammenfassung**

Es werden eine Position und eine Orientierung eines Objekts (5) eines bekannten Formtyps bestimmt. Das Objekt (5) wird entlang einer Förderrichtung (F) auf einer Förderfläche (27) einer Fördereinrichtung (25) mit einer bekannten Fördergeschwindigkeit durch einen Detektionsbereich (31) gefördert. Für eine Mehrzahl von Lichtschranken (29), deren Strahlwege den Detektionsbereich (31) unter unterschiedlichen Winkeln durchlaufen, wird jeweils ein Unterbrechungszeitpunkt, an dem die Lichtschranke (29) durch das geförderte Objekt (5) unterbrochen wird, und ein dem Unterbrechungszeitpunkt zeitlich nachfolgender Wiederherstellungszeitpunkt bestimmt, an dem die Unterbrechung der Lichtschranke (29) durch das Objekt (5) aufgehoben wird.Die Position und die Orientierung des Objekts (5) auf der Förderfläche (27) werden basierend auf den Unterbrechungszeitpunkten und den Wiederherstellungszeitpunkten für die einzelnen Lichtschranken (29), der bekannten Fördergeschwindigkeit, den bekannten Strahlwegen der Lichtschranken (29) und dem Formtyp des Objekts (5) bestimmt.

## Beschreibung

Die Erfindung betrifft das Gebiet des Bestimmens einer Position und einer Orientierung eines mittels einer Fördereinrichtung geförderten Objekts.

Beispielsweise für den Betrieb von Verpackungsmaschinen, insbesondere Lebensmittelverpackungsmaschinen, aber auch für andere Anwendungen, kann es wichtig sein, eine Position und eine Orientierung eines Objekts auf einer Förderfläche einer Fördereinrichtung bestimmen zu können. Es ist z.B. bekannt, Position und Orientierung von mittels eines Förderbands zu einer Einlegestrecke einer Verpackungsmaschine geförderten Lebensmitteln zu bestimmen, um diese im Bereich der Einlegestrecke mittels eines Pickers gezielt greifen und in zu befüllende Verpackungen umsetzen zu können. Hierzu sind aus der Praxis Visionssysteme bekannt, welche eine Kamera zum Aufnehmen eines Bilds des auf dem Förderband geförderten Produkts aufweisen. Anhand des Bildes werden mittels einer Analysesoftware die Position und die Orientierung des Produkts auf dem Förderband ermittelt und der Picker geeignet angesteuert. Abhängig von dem transportierten Produkt und den Umgebungsbedingungen ist die Bildanalyse teilweise sehr aufwendig. Bestimmte Produkte lassen sich mit solchen Visionssystemen nur unzuverlässig detektieren. Beispielsweise kann beim Transport von Lebensmittelprodukten der Kontrast zwischen den Produkten und der umliegenden Fläche des Förderbands durch von den Produkten stammende Verunreinigungen, wie beispielsweise Saft- oder Soße, reduziert und so eine genaue Bestimmung der Position oder der Orientierung des Produkts erschwert oder unmöglich gemacht werden.

Es ist Aufgabe der Erfindung, ein möglichst zuverlässiges und einfaches Verfahren zum Bestimmen einer Position und einer Orientierung eines von einer Fördereinrichtung geförderten Objekts sowie eine entsprechende Vorrichtung bereitzustellen.

Diese Aufgabe wird durch den Gegenstand der Ansprüche 1 und 9 gelöst. Die abhängigen Ansprüche geben vorteilhafte Ausführungsformen der Erfindung an.

Die Erfindung stellt ein Verfahren zum Bestimmen einer Position und einer Orientierung eines Objekts bereit. Dabei ist der Formtyp des Objekts bekannt. Exemplarische Beispiele für mögliche Formtypen sind quaderförmig, zylinderförmig mit runder oder elliptischer Grundfläche und darauf senkrecht stehender Seitenwand, oder zylinderförmig mit kreissegmentförmiger oder polygonaler Grundfläche und darauf senkrecht stehenden Seitenwänden. Bei dem erfindungsgemäßen Verfahren ist die Kenntnis des Formtyps des Objekts ausreichend und eine Kenntnis der Größe des Objekts, also dessen Abmessungen, ist nicht zwingend erforderlich. Dennoch kann die Größe des Objekts auch von vornherein bekannt sein.

Gemäß dem Verfahren wird das Objekt entlang einer Förderrichtung auf einer Förderfläche einer Fördereinrichtung, beispielsweise eines Förderbands, mit einer bekannten Fördergeschwindigkeit durch einen Detektionsbereich gefördert. Die Fördergeschwindigkeit kann aufgrund bekannter Eigenschaften der Fördereinrichtung und/oder deren Einstellungen ohnehin bekannt sein, kann aber auch gemessen werden. Es ist denkbar, dass die Fördergeschwindigkeit zeitlich konstant ist. Die Fördergeschwindigkeit kann aber auch zeitlich veränderlich sein. Das Verfahren verwendet eine Mehrzahl von Lichtschranken, deren Strahlwege den Detektionsbereich, insbesondere in Draufsicht auf die Förderfläche der Fördereinrichtung in Projektion auf die Förderfläche gesehen, unter unterschiedlichen Winkeln gegenüber der Förderrichtung durchlaufen. Vorzugsweise verlaufen die Strahlwege der Lichtschranken parallel zu der Förderfläche der Fördereinrichtung. Es wäre aber auch denkbar, dass zumindest einige Strahlwege gegenüber der Förderfläche der Fördereinrichtung geneigt sind. Es versteht sich, dass die Lichtschranken so positioniert sein sollen, dass das auf der Förderfläche der Fördereinrichtung geförderte Objekt beim Durchlaufen des Detektionsbereichs die Strahlwege der Lichtschranken durchkreuzt. Für jede Lichtschranke wird während des Förderns des Objekts durch den Detektionsbereich ein Unterbrechungszeitpunkt bestimmt, an dem die Lichtschranke durch das geförderte Objekt unterbrochen wird. Zudem wird für jede Lichtschranke ein dem Unterbrechungszeitpunkt zeitlich nachfolgender Wiederherstellungszeitpunkt bestimmt, an dem die Unterbrechung der Lichtschranke durch das Objekt aufgehoben wird.

Basierend auf den Unterbrechungszeitpunkten und den Wiederherstellungszeitpunkten für die einzelnen Lichtschranken, der bekannten Fördergeschwindigkeit, den bekannten Strahlwegen der Lichtschranken und dem bekannten Formtyp des Objekts werden, vorzugsweise von einer Analyseeinheit, eine Position und eine Orientierung des Objekts auf der Förderfläche bestimmt.

Das erfindungsgemäße Verfahren ist nicht vom Vorliegen eines guten Kontrastes zwischen dem Objekt und der Förderfläche abhängig und daher auch zur zuverlässigen Positions- und Orientierungsbestimmung von Objekten einsetzbar, welche mit Visionssystemen aufgrund eines geringen Kontrastes nur unzureichend detektierbar sind. Die zur Bestimmung der Position und der Orientierung verwendeten Daten, insbesondere die Unterbrechungszeitpunkte und Wiederherstellungszeitpunkte der einzelnen Lichtschranken, lassen sich insbesondere im Vergleich zu in Visionssystemen einzusetzenden Bildanalysealgorithmen relativ einfach handhaben. Das erfindungsgemäße Verfahren ist besonders kostengünstig und funktioniert unabhängig von der Größe des geförderten Objekts. Es ist also nicht notwendig, das Verfahren bei einer Änderung der Objektgröße anzupassen, solange der Formtyp derselbe bleibt.

Obwohl eine Kenntnis der Größe des Objekts für das Bestimmen der Position und der Orientierung des Objekts auf der Förderfläche nicht notwendig ist, kann die Größe des Objekts, falls sie ohnehin bekannt ist, dennoch herangezogen werden, um das Bestimmen der Position und der Orientierung des Objekts zu vereinfachen. Ist die Größe des Objekts nicht bekannt, kann in dem Schritt zum Bestimmen der Position und der Orientierung des Objekts, vorzugsweise ebenfalls durch die Analyseeinheit, zusätzlich zu der Position und der Orientierung des Objekts auch die Größe des Objekts bestimmt werden. Auch dies geschieht basierend auf den Unterbrechungszeitpunkten und den Wiederherstellungszeitpunkten für die einzelnen Lichtschranken, der bekannten Fördergeschwindigkeit, den bekannten Strahlwegen der Lichtschranken und dem bekannten Formtyp des Objekts.

Vorzugsweise wird in dem Schritt zum Bestimmen der Position und der Orientierung des Objekts, insbesondere durch die Analyseeinheit, für jede Lichtschranke basierend auf dem Unterbrechungszeitpunkt und dem Wiederherstellungszeitpunkt für die jeweilige Lichtschranke, der bekannten Fördergeschwindigkeit und dem bekannten Strahlweg der Lichtschranke ein (sich bewegender) Aufenthaltsstreifen für das Objekt ermittelt, innerhalb dessen das Objekt liegt. Mittels des Unterbrechungszeitpunkts, des Wiederherstellungszeitpunkts und der Fördergeschwindigkeit lässt sich die Lage des Objekts auf der Förderfläche durch einfache Berechnungen auf den Aufenthaltsstreifen eingrenzen, welcher durch zwei entlang der Förderrichtung voneinander beabstandete, zueinander parallele Begrenzungslinien begrenzt wird. Die Begrenzungslinien sind jeweils parallel zu dem Strahlweg der zu dem Aufenthaltsstreifen korrespondierenden Lichtschranke.

In dem Schritt zum Bestimmen der Position und der Orientierung des Objekts können, vorzugsweise durch die Analyseeinheit, die für die einzelnen Lichtschranken erhaltenen Aufenthaltsstreifen überlagert werden und so ein Aufenthaltsvieleck ermittelt werden, innerhalb dessen das Objekt liegt. Das Aufenthaltsvieleck ist ein Flächenbereich, welcher in sämtlichen Aufenthaltsstreifen enthalten ist. Durch Überlagerung der Aufenthaltsstreifen, die zu den unterschiedlich ausgerichteten Lichtschranken korrespondieren, lässt sich der mögliche Aufenthaltsbereich des Objekts auf einfache Art und Weise weiter einschränken.

In dem Schritt zum Bestimmen der Position und der Orientierung des Objekts kann, insbesondere durch die Analyseeinheit, das Objekt basierend auf dem bekannten Formtyp des Objekts rechnerisch in das Aufenthaltsvieleck eingepasst werden. Ist die Größe des Objekts bereits im Vorhinein bekannt, lässt sich das Objekt besonders einfach rechnerisch in das Aufenthaltsvieleck einpassen. Ist die Größe des Objekts nicht im Vorhinein bekannt, kann diese zusammen mit der Position und Orientierung des Objekts durch das rechnerische Einpassen in das Aufenthaltsvieleck bestimmt werden. Die Berechnungen zum Einpassen des Objekts in das Aufenthaltsvieleck lassen sich beispielsweise besonders ressourceneffizient basierend auf Operationen der euklidischen Geometrie durchführen.

Besonders geeignet ist das erfindungsgemäße Verfahren zur Positions-, Orientierungs- und ggf. auch Größenbestimmung von Objekten, deren Formtyp von der Art ist, dass eine Projektion des Objekts in Draufsicht auf die das Objekt tragende Förderfläche rotationssymmetrisch oder doppelt spiegelsymmetrisch ist. In diesem Fall kann in dem Schritt zum Bestimmen der Position und der Orientierung des Objekts, insbesondere durch die Analyseeinheit, ein Schwerpunkt des Aufenthaltsvielecks als Schwerpunkt des Objekts identifiziert werden. Hierdurch wird die Bestimmung der Position, der Orientierung und ggf. der Größe des Objekts weiter vereinfacht.

Ist der Formtyp des Objekts quaderförmig, können in dem Schritt zum Bestimmen der Position und der Orientierung des Objekts, vorzugsweise durch die Analyseeinheit, gemeinsame Schnittpunkte wenigstens dreier Begrenzungslinien der Aufenthaltsstreifen für das Objekt jeweils als Position einer insbesondere auf der Förderfläche senkrecht stehenden Kante des Quaders identifiziert werden. So identifizierte Positionen von Kanten des Quaders können das rechnerische Einpassen des quaderförmigen Objekts in das Aufenthaltsvieleck deutlich vereinfachen.

Besonders zuverlässige Ergebnisse liefert das Verfahren für Objekte, deren Formtyp zylinderförmig ist, wobei der Zylinder mit seiner Grundfläche auf der Förderfläche der Fördereinrichtung steht und die Seitenwände (oder die Seitenwand) des Zylinders zu der Förderfläche senkrecht stehen. Die Grundfläche des Zylinders kann beispielsweise kreisförmig, elliptisch, kreissegmentförmig oder polygonal sein. Wenn die Seitenwände (oder die Seitenwand) des Zylinders senkrecht auf der Förderfläche stehen, lassen sich Position, Orientierung und ggf. Größe des Objekts besonders gut bestimmen, da keine Effekte schräger Seitenflächen auf die Unterbrechungszeitpunkte und die Wiederherstellungszeitpunkte der einzelnen Lichtschranken berücksichtig werden müssen.

Vorzugsweise wird das erfindungsgemäße Verfahren zum Bestimmen einer Position, einer Orientierung und gegebenenfalls einer Größe eines zu verpackenden Produkts (Objekt) angewandt, welches auf der Förderfläche der Fördereinrichtung, welche insbesondere ein Förderband sein kann, einer Einlegestrecke einer Verpackungsmaschine zugefördert wird. Nach dem Bestimmen der Position und der Orientierung und ggf. der Größe des Produkts, wie oben beschrieben, kann dieses mittels eines Pickers gegriffen werden und in Verpackungsmulden im Bereich der Einlegestrecke umgesetzt werden. Die Ansteuerung des Pickers kann unter Berücksichtigung der bestimmten Position und Orientierung sowie ggf. Größe des Produkts erfolgen, um den Greifvorgang zu optimieren und zu gewährleisten, dass das Produkt in der richtigen Orientierung in die zugehörige Verpackungsmulde umgesetzt wird. Bei der Verpackungsmaschine kann es sich beispielsweise um eine Tiefziehverpackungsmaschine handeln, welche eine Formstation mit einem Formwerkzeug zum Ausbilden von Verpackungsmulden in einer Unterfolie, die Einlegestrecke zum Befüllen der Verpackungsmulden mit den Produkten, eine Siegelstation mit einem Siegelwerkzeug zum Verschließen der befüllten Verpackungsmulden mit einer Oberfolie, eine Schneidstation zum Trennen der verschlossenen Verpackungsmulden, und eine Vorschubeinrichtung zum Fördern der Unterfolie von der Formstation über die Einlegestrecke zu der Siegelstation und weiter zu der Schneidstation umfasst.

Die Erfindung betrifft ebenfalls eine Vorrichtung zum Bestimmen einer Position und einer Orientierung eines Objekts. Die Vorrichtung ist zum Durchführen des erfindungsgemäßen Verfahrens geeignet, konfiguriert und ausgelegt. In Bezug auf das Verfahren beschriebene Merkmale sind auf die Vorrichtung übertragbar und umgekehrt.

Eine erfindungsgemäße Vorrichtung zum Bestimmen einer Position und einer Orientierung eines Objekts eines bekannten Formtyps umfasst eine Fördereinrichtung mit einer Förderfläche zur Aufnahme des Objekts. Die Fördereinrichtung ist dazu konfiguriert, das Objekt entlang einer Förderrichtung mit einer bekannten Fördergeschwindigkeit durch einen Detektionsbereich zu fördern. Die Fördergeschwindigkeit kann zeitlich konstant oder veränderlich sein. Die Vorrichtung umfasst zudem eine Mehrzahl von Lichtschranken, deren Strahlwege den Detektionsbereich, insbesondere in Draufsicht auf die Förderfläche der Fördereinrichtung in Projektion auf die Förderfläche gesehen, unter unterschiedlichen Winkeln gegenüber der Förderrichtung durchlaufen. Die Lichtschranken sind jeweils dazu konfiguriert, einen Unterbrechungszeitpunkt, an dem die Lichtschranke durch das geförderte Objekt unterbrochen wird, und einen dem Unterbrechungszeitpunkt zeitlich nachfolgenden Wiederherstellungszeitpunkt, an dem die Unterbrechung der Lichtschranke durch das Objekt aufgehoben wird, zu bestimmen. Des Weiteren umfasst die Vorrichtung eine Analyseeinheit. Die Analyseeinheit ist zum Bestimmen einer Position und einer Orientierung des Objekts auf der Förderfläche der Fördereinrichtung und ggf. einer Größe des Objekts basierend auf den Unterbrechungszeitpunkten und den Wiederherstellungszeitpunkten für die einzelnen Lichtschranken, der bekannten Fördergeschwindigkeit, den bekannten Strahlwegen der Lichtschranken und dem bekannten Formtyp des Objekts konfiguriert.

Die Analyseeinheit kann eine Speichereinheit mit Programminformationen und einen Prozessor umfassen und Signale von den Lichtschranken empfangen, welche die Unterbrechungszeitpunkte und Wiederherstellungszeitpunkte angeben. Die Analyseeinheit kann als eine kompakte Einheit vorgesehen sein, kann aber auch auf mehrere Untereinheiten verteilt sein.

Vorteilhafte Ausführungen der erfindungsgemäßen Vorrichtung ergeben sich aus den oben stehenden Ausführungen bzgl. des Verfahrens.

Vorzugsweise ist die erfindungsgemäße Vorrichtung Teil einer Verpackungsmaschine. In diesem Fall handelt es sich bei dem Objekt um ein zu verpackendes Produkt und die Fördereinrichtung ist eine Fördereinrichtung, insbesondere ein Förderband, zum Zuführen des Produkts zu einer Einlegestrecke der Verpackungsmaschine. Die Verpackungsmaschine kann insbesondere eine Tiefziehverpackungsmaschine sein und eine Formstation mit einem Formwerkzeug zum Ausbilden von Verpackungsmulden in einer Unterfolie, eine Einlegestrecke zum Befüllen der Verpackungsmulden mit von der Fördereinrichtung zugeführten Produkten, eine Siegelstation mit einem Siegelwerkzeug zum Verschließen der befüllten Verpackungsmulden mit einer Oberfolie, eine Schneidstation zum Trennen der verschlossenen Mulden und eine Vorschubeinrichtung zum Fördern der Unterfolie von der Formstation über die Einlegestrecke zu der Siegelstation und weiter zu der Schneidstation umfassen. Die Verpackungsmaschine kann zudem einen Picker mit einer Greifeinrichtung zum Umsetzen der zu verpackenden Produkte von der Fördereinrichtung in die Verpackungsmulden im Bereich der Einlegestrecke umfassen. Der Picker kann basierend auf der von der Analyseeinheit bestimmten Position und Orientierung, ggf. auch der Größe der Produkte angesteuert werden, um die Produkte sicher greifen zu können und in einer korrekten Orientierung in die Verpackungsmulden umsetzen zu können.

Im Folgenden wird die Erfindung anhand von Ausführungsbeispielen unter Bezugnahme auf die Figuren weiter erläutert. Dabei zeigen:
- Fig. 1: eine schematische Draufsicht auf eine Verpackungsmaschine mit einer Vorrichtung zum Bestimmen einer Position und einer Orientierung eines Objekts gemäß einer Ausführungsform;
- Fig. 2: eine schematische Draufsicht auf den Detektionsbereich einer erfindungsgemäßen Vorrichtung gemäß einer Ausführungsform zur Illustration des verwendeten Messprinzips;
- Fig. 3: eine schematische Darstellung zur Bestimmung einer Position und einer Orientierung eines quaderförmigen Objekts gemäß eines Verfahrens nach einer Ausführungsform; und
- Fig. 4: eine schematische Darstellung zur Bestimmung einer Position und einer Orientierung eines zylinderförmigen Objekts mit ellipsenförmiger Grundfläche gemäß eines Verfahrens nach einer Ausführungsform.

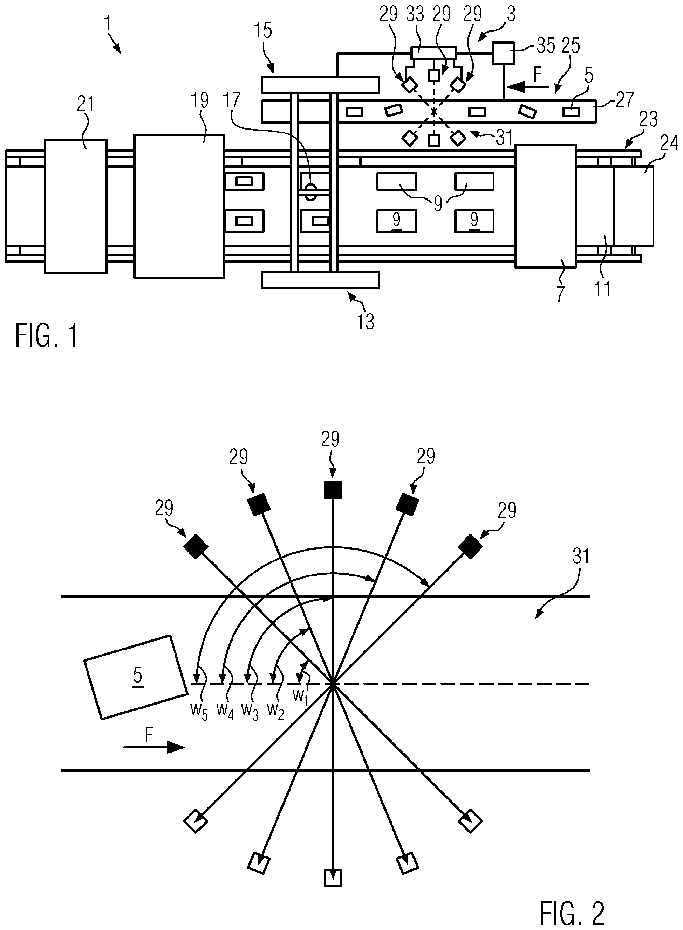

In Figur 1 ist in schematischer Draufsicht eine Tiefziehverpackungsmaschine 1 mit einer Vorrichtung 3 zum Bestimmen einer Position und einer Orientierung eines Objekts 5 gemäß einer Ausführungsform dargestellt. In dem gezeigten Fall handelt sich es sich bei dem Objekt 5 um ein Produkt, welches mit der Verpackungsmaschine 1 verpackt werden soll. Obwohl dies ein bevorzugtes Anwendungsgebiet ist, ist die erfindungsgemäße Vorrichtung 3 auch außerhalb von Verpackungsmaschinen für andere Zwecke einsetzbar.

Die Tiefziehverpackungsmaschine 1 umfasst eine Formstation 7, welche mittels eines Formwerkzeugs, insbesondere durch Tiefziehen, Verpackungsmulden 9 in einer Unterfolie 11 ausbildet. Entlang einer Einlegestrecke 13 werden die Verpackungsmulden 9 mittels eines Pickers 15 mit einem Greifer 17 mit den zu verpackenden Produkten 5 befüllt. Die Tiefziehverpackungsmaschine 1 umfasst des Weiteren eine Siegelstation 19 mit einem Siegelwerkzeug zum Verschließen der befüllten Verpackungsmulden 9 mit einer Oberfolie. Eine Schneidstation 21 der Tiefziehverpackungsmaschine 1 ist dazu ausgelegt, die durch die befüllten und mit der Oberfolie verschlossenen Verpackungsmulden 9 gebildeten Verpackungen voneinander zu trennen. Eine Vortriebseinrichtung 23 der Tiefziehverpackungsmaschine 1 wickelt die Unterfolie 11 von einer Vorratsrolle 24 ab und fördert die Unterfolie in der genannten Reihenfolge zur Formstation 7, zur Einlegestrecke 13, zur Siegelstation 19 und schließlich zur Schneidstation 21.

Um die zu verpackenden Produkte 5 zu der Einlegestrecke 13 zu bringen, ist eine Fördereinrichtung 25, in der gezeigten Ausführungsform ein Förderband, mit einer Förderfläche 27 zur Aufnahme der Produkte 5 vorgesehen. Die Fördereinrichtung 25 fördert die Produkte 5 entlang einer Förderrichtung F auf die Einlegestrecke 13 hin. Bei Erreichen eines Abnahmebereichs werden die Produkte 5 mittels des Greifers 17 des Pickers 15 von der Fördereinrichtung 25 entnommen und in im Bereich der Einlegestrecke 13 befindliche Verpackungsmulden 9 umgesetzt. Damit der Greifer 17 die Produkte 5 ordnungsgemäß greifen und in der korrekten Orientierung in die Verpackungsmulden 9 umsetzen kann, werden dem Picker 15 Informationen über die Position und Orientierung der einzelnen umzusetzenden Produkte 5 zugeführt.

Zur Bestimmung der Position und Orientierung der Produkte 5 ist eine Mehrzahl von Lichtschranken 29 vorgesehen. Die Strahlwege der Lichtschranken 29 durchlaufen unter unterschiedlichen Winkeln einen Detektionsbereich 31, durch welchen die Produkte 5 von der Fördereinrichtung 25 gefördert werden. Die Strahlwege der Lichtschranken 29 kreuzen die Förderrichtung F der Fördereinrichtung 25 und verlaufen auf einer derart gewählten Höhe über der Förderfläche 27, dass sie von durch den Detektionsbereich 31 geförderten Produkten 5 unterbrochen werden. Die Lichtschranken 29 sind jeweils dazu konfiguriert, einen Unterbrechungszeitpunkt, an dem die Lichtschranke 29 durch das geförderte Produkt 5 unterbrochen wird, und einen dem Unterbrechungszeitpunkt zeitlich nachfolgenden Wiederherstellungszeitpunkt zu bestimmen, an dem die Unterbrechung der Lichtschranke 29 durch das Produkt 5 aufgehoben wird.

Die Lichtschranken 29 geben den Unterbrechungszeitpunkt und den Wiederherstellungszeitpunkt angebende Signale an eine Analyseeinheit 33 aus, welche die Position und Orientierung des entsprechenden Produkts 5 auf der Förderfläche 27 bestimmt. Die Analyseeinheit 33 kann zudem die Größe des Produkts 5 bestimmen. Neben den Unterbrechungszeitpunkten und Wiederherstellungszeitpunkten der einzelnen Lichtschranken 29 verwendet die Analyseeinheit 33 zum Bestimmen der Position und Orientierung und ggf. der Größe eines Produkts 5 die Fördergeschwindigkeit des Produkts 5 durch den Detektionsbereich 31, die bekannte Lage und Ausrichtung der Strahlwege der Lichtschranken 29 und den bekannten Formtyp des Produkts 5. Die Fördergeschwindigkeit kann als fixer Wert oder als Geschwindigkeitsprofil in der Analyseeinheit 33 gespeichert sein. Es wäre aber auch denkbar, dass die Analyseeinheit 33, insbesondere einmalig, in Intervallen oder kontinuierlich, die Fördergeschwindigkeit über einen entsprechenden Geschwindigkeitssensor bestimmt oder von einer Steuereinheit 35 der Tiefziehverpackungsmaschine 1, welche unter anderem zum Steuern des Betriebs der Fördereinrichtung 25 konfiguriert sein kann, erhält. Der Formtyp der Produkte 5 ist vorzugsweise über ein Benutzerinterface an der Analyseeinheit 33 oder an der Steuereinheit 35 eingebbar.

Figur 1 zeigt schematisch eine Ausführungsform mit drei Lichtschranken 29. Es kann aber auch eine größere Anzahl von Lichtschranken 29 vorgesehen sein. Beispielsweise zeigt Figur 2 in schematischer Draufsicht einen Detektionsbereich 31 einer Vorrichtung 3 zum Bestimmen einer Position und einer Orientierung eines Objekts 5 mit fünf Lichtschranken 29, wobei in dieser Darstellung die Förderrichtung F von links nach rechts verläuft. Die Strahlwege der Lichtschranken 29 durchlaufen den Detektionsbereich 31, insbesondere in Draufsicht auf die Förderfläche 27 der Fördereinrichtung 25 in Projektion auf die Förderfläche 27 gesehen, unter unterschiedlichen Winkeln w1, w2, w3, w4, w5 gegenüber der Förderrichtung F. Wie anhand von Figur 2 ersichtlich, wird der Strahlweg jeder der Lichtschranken 29 beim Fördern des Produkts 5 durch den Detektionsbereich 31 zu einem bestimmten Zeitpunkt, dem Unterbrechungszeitpunkt, unterbrochen. Der Unterbrechungszeitpunkt ist im Allgemeinen für die verschiedenen Lichtschranken 29 unterschiedlich. Wenn das Produkt 5 in Förderrichtung F weitergefördert wird, gibt es zu einem späteren Zeitpunkt, dem Wiederherstellungszeitpunkt, den Strahlweg der Lichtschranke 29 wieder frei. Auch der Wiederherstellungszeitpunkt ist im Allgemeinen für jede Lichtschranke 29 unterschiedlich. In Fig. 2 schneiden sich die Strahlwege aller Lichtschranken 29 in einem gemeinsamen Punkt. Dies ist aber nicht zwingend erforderlich.

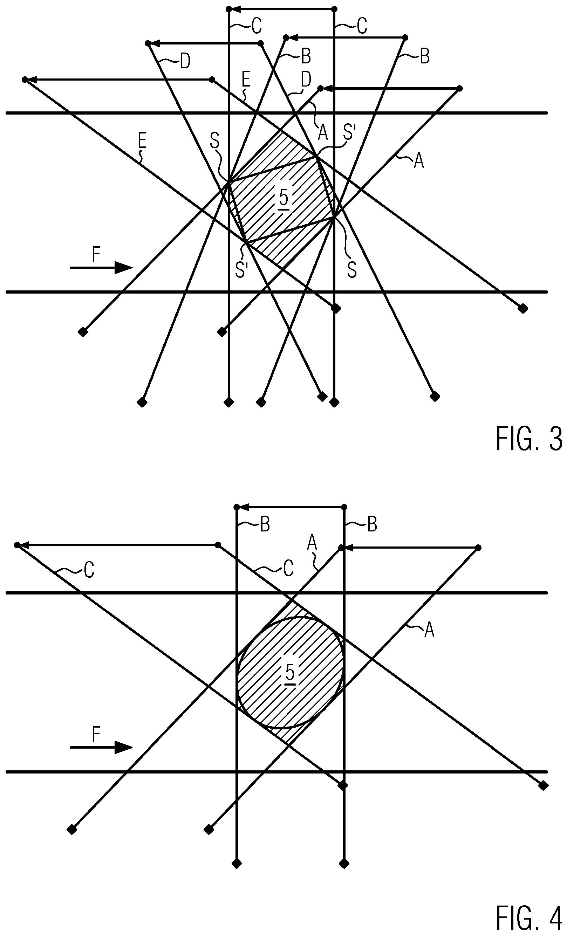

Aus dem gemessenen Unterbrechungszeitpunkt und dem gemessenen Wiederherstellungszeitpunkt bestimmt die Analyseeinheit 33 gemäß einer Ausführungsform für jede Lichtschranke 29 unter Berücksichtigung der Fördergeschwindigkeit der Fördereinrichtung 25 einen Aufenthaltsstreifen für das Produkt 5, innerhalb dessen das Produkt 5 liegt. Figur 3 illustriert die Bestimmung der Aufenthaltsstreifen für die einzelnen Lichtschranken 29 in dem System aus Figur 2. In Figur 3 sind fünf Aufenthaltsstreifen gezeigt, für jede Lichtschranke 29 einer. Die Aufenthaltsstreifen sind jeweils durch zwei parallele bzgl. der Förderrichtung F gegeneinander verschobene Begrenzungslinien A, B, C, D, E begrenzt. Die bezüglich der Förderrichtung F jeweils weiter stromabwärts liegende Begrenzungslinie A, B, C, D, E eines Paares von Begrenzungslinien A, B, C, D, E wird jeweils unter Berücksichtigung des Strahlwegs der zugehörigen Lichtschranke 29 aus dem Unterbrechungszeitpunkt ermittelt. Zum Erhalten dieser Begrenzungslinien A, B, C, D, E wird der tatsächliche Verlauf der Strahlwege der Lichtschranken 29 basierend auf der bekannten Fördergeschwindigkeit durch Verschieben entlang der Förderrichtung F unter Berücksichtigung der gemessenen Unterbrechungszeitpunkte derart korrigiert, dass die stromabwärts gelegenen Begrenzungslinien A, B, C, D, E der Lichtschranken 29 jeweils die Linie angeben, welche vor dem Produkt 5 zu einem gemeinsamen Zeitpunkt gerade überschritten wird. Die stromabwärts gelegenen Begrenzungslinien A, B, C, D, E geben also jeweils eine stromabwärts gelegene, vordere Schranke für den Aufenthaltsort des Produkts 5 zu dem gemeinsamen Zeitpunkt an. Unter Berücksichtigung des jeweiligen Wiederherstellungszeitpunkts kann zu jeder stromabwärts gelegenen Begrenzungslinie A, B, C, D, E eine stromaufwärts gelegene Begrenzungslinie berechnet werden, welche eine hintere Schranke für den Aufenthaltsort des Produkts 5 zu demselben gemeinsamen Zeitpunkt angibt. Hierzu kann die jeweilige stromabwärts gelegene Begrenzungslinie A, B, C, D, E einfach um eine Strecke entgegen der Förderrichtung F nach hinten verschoben werden, die dem Weg entspricht, welchen das Produkt 5 in der Zeitdifferenz zwischen Unterbrechungszeitpunkt und Wiederherstellungszeitpunkt für die jeweilige Lichtschranke 29 mit der Fördergeschwindigkeit der Fördereinrichtung 25 zurücklegt. Ersichtlicherweise geben die beiden zu einer Lichtschranke 29 korrespondierenden Begrenzungslinien A, B, C, D, E jeweils einen Aufenthaltsstreifen an, innerhalb dessen das Produkt 5 zu dem bestimmten gemeinsamen Zeitpunkt liegt.

Durch Überlagerung der Aufenthaltsstreifen für die einzelnen Lichtschranken 29 bestimmt die Analyseeinheit 33 ein Aufenthaltsvieleck, innerhalb dessen das Produkt 5 zu dem gemeinsamen Zeitpunkt liegt. Das Aufenthaltsvieleck entspricht einer Fläche, welche vollständig Teil eines jeden Aufenthaltsstreifens ist. In Figur 3 ist das Aufenthaltsvieleck schraffiert dargestellt. Nach einer Bestimmung des Aufenthaltsvielecks kann die Analyseeinheit 33 basierend auf dem bekannten Formtyp des Produkts 5 das Produkt 5 rechnerisch in das Aufenthaltsvieleck einpassen. Besonders einfach ist dies, wenn die Größe des Produkts 5 bereits bekannt ist. Aber auch bei unbekannter Größe des Produkts 5 kann das Produkt 5 unter Berücksichtigung des bekannten Formtyps in das Aufenthaltsvieleck eingepasst werden.

In der in Figur 3 gezeigten Ausführungsform ist der Formtyp des Objekts 5 quaderförmig. Hier kann das Einpassen in das Aufenthaltsvieleck beispielsweise dadurch erfolgen, dass die Analyseeinheit 33 gemeinsame Schnittpunkte S wenigstens dreier Begrenzungslinien A, B, C, D, E der Aufenthaltsstreifen für das Objekt 5 als Positionen von Kanten des Quaders identifiziert. In Figur 3 liegen zwei solcher Schnittpunkte S dreier Begrenzungslinien A, B, C, D, E vor. Die Positionen der beiden verbleibenden Kanten S' des Quaders lassen sich beispielsweise als die Schnittpunkte der Begrenzung des Aufenthaltsvielecks mit einem Kreis bestimmen, welcher im Zentrum einer Verbindungslinie der ersten beiden Schnittpunkte S seinen Ursprung hat und durch die ersten beiden Schnittpunkte S verläuft. Für quaderförmige Produkte 5 und allgemein Produkte 5 eines derartigen Formtyps, dass die Projektion des Produkts 5 in Draufsicht auf die das Produkt 5 tragende Förderfläche 27 rotationssymmetrisch oder doppelt spiegelsymmetrisch ist, kann auch berücksichtigt werden, dass ein Schwerpunkt des Aufenthaltsvielecks dem Schwerpunkt des Produkts 5 (in Projektion von oben) entspricht. So kann der Schwerpunkt des Aufenthaltsvielecks als Schwerpunkt des Produkts 5 identifiziert werden und das Einpassen in das Aufenthaltsvieleck erleichtert werden.

Figur 4 zeigt die Konstruktion der Aufenthaltsstreifen für den Fall, dass lediglich drei Lichtschranken 29 vorgesehen sind und der Formtyp des Produkts 5 zylindrisch mit elliptischer Grundfläche ist. Nachdem es sich hierbei um einen in Projektion in Draufsicht auf die Förderfläche 27 doppelt spiegelsymmetrischen Formtyp handelt, kann der Schwerpunkt der Ellipse als der Schwerpunkt des Aufenthaltsvielecks (schraffiert) bestimmt werden. Da zu dem Zeitpunkt, an dem eine bestimmte Lichtschranke 29 unterbrochen oder wieder frei wird, die Ellipse immer tangential an dem Strahlweg der Lichtschranke 29 anliegt, muss die Ellipse derart in das Aufenthaltsvieleck eingepasst werden, dass sie mit jeder der Begrenzungslinien A, B, C, der Aufenthaltsbereiche genau einen Berührungspunkt aufweist. Dies kann entweder grafisch oder durch Gleichsetzen einer Ellipsengleichung (mit dem ermittelten Schwerpunkt des Aufenthaltsvielecks als Schwerpunkt) und den Geradengleichungen für die sechs Begrenzungsgeraden oder einen Teil der Begrenzungsgeraden erfolgen.

Wie oben ausgeführt, wird mit dem Einpassen des Objekts 5 in das Aufenthaltsvieleck die Lage und Orientierung und ggf. auch die Größe des Produkts 5 zu dem bestimmten gemeinsamen Zeitpunkt ermittelt. Da die Fördergeschwindigkeit der Fördereinrichtung 25 bekannt ist, kann hieraus die Position und Orientierung des Produkts 5 zu jedem anderen Zeitpunkt während des Förderns des Produkts 5 bestimmt werden, insbesondere zu dem für die Aufnahme mit dem Greifer 17 relevanten Zeitpunkt.

In den Figuren 3 und 4 wurde die Erfindung anhand von Objekten 5 des Formtyps quaderförmig bzw. zylindrisch mit elliptischer Grundfläche erläutert. Die Erfindung ist aber auch auf Objekte 5 mit anderen Formtypen anwendbar. Beispielsweise kann der Formtyp des Objekts 5 zylinderförmig mit kreisförmiger, kreissegmentförmiger oder polygonaler Grundfläche sein, wobei die Grundfläche auf der Förderfläche 27 der Fördereinrichtung 25 steht und die zumindest eine Seitenwand des Zylinders zu der Förderfläche 27 senkrecht steht.

## Patentansprüche

1. Verfahren zum Bestimmen einer Position und einer Orientierung eines Objekts (5) eines bekannten Formtyps, umfassend:
Fördern des Objekts (5) entlang einer Förderrichtung (F) auf einer Förderfläche (27) einer Fördereinrichtung (25) mit einer bekannten Fördergeschwindigkeit durch einen Detektionsbereich (31);
für eine Mehrzahl von Lichtschranken (29), deren Strahlwege den Detektionsbereich (31) unter unterschiedlichen Winkeln durchlaufen, jeweils Bestimmen eines Unterbrechungszeitpunkts, an dem die Lichtschranke (29) durch das geförderte Objekt (5) unterbrochen wird, und eines dem Unterbrechungszeitpunkt zeitlich nachfolgenden Wiederherstellungszeitpunkts, an dem die Unterbrechung der Lichtschranke (29) durch das Objekt (5) aufgehoben wird; und
Bestimmen einer Position und einer Orientierung des Objekts (5) auf der Förderfläche (27) basierend auf den Unterbrechungszeitpunkten und den Wiederherstellungszeitpunkten für die einzelnen Lichtschranken (29), der bekannten Fördergeschwindigkeit, den bekannten Strahlwegen der Lichtschranken (29) und dem Formtyp des Objekts (5).

2. Verfahren nach Anspruch 1, wobei in dem Schritt zum Bestimmen der Position und der Orientierung des Objekts (5) zusätzlich zu der Position und der Orientierung des Objekts (5) basierend auf den Unterbrechungszeitpunkten und den Wiederherstellungszeitpunkten für die einzelnen Lichtschranken (29), der bekannten Fördergeschwindigkeit, den bekannten Strahlwegen der Lichtschranken (29) und dem Formtyp des Objekts (5) auch eine Größe des Objekts (5) bestimmt wird.

3. Verfahren nach Anspruch 1 oder 2, wobei in dem Schritt zum Bestimmen der Position und der Orientierung des Objekts (5) für jede Lichtschranke (29) basierend auf dem Unterbrechungszeitpunkt und dem Wiederherstellungszeitpunkt für die jeweilige Lichtschranke (29), der bekannten Fördergeschwindigkeit und dem bekannten Strahlweg der Lichtschranke (29) ein Aufenthaltsstreifen für das Objekt (5) ermittelt wird, innerhalb dessen das Objekt (5) liegt.

4. Verfahren nach Anspruch 3, wobei in dem Schritt zum Bestimmen der Position und der Orientierung des Objekts (5) die Aufenthaltsstreifen überlagert werden und so ein Aufenthaltsvieleck ermittelt wird, innerhalb dessen das Objekt (5) liegt.

5. Verfahren nach Anspruch 4, wobei in dem Schritt zum Bestimmen der Position und der Orientierung des Objekts (5) das Objekt (5) basierend auf dem bekannten Formtyp des Objekts rechnerisch in das Aufenthaltsvieleck eingepasst wird.

6. Verfahren nach Anspruch 4, wobei der Formtyp des Objekts (5) derart ist, dass die Projektion des Objekts (5) in Draufsicht auf die das Objekt (5) tragende Förderfläche (27) rotationssymmetrisch oder doppelt spiegelsymmetrisch ist, und wobei in dem Schritt zum Bestimmen der Position und der Orientierung des Objekts (5) ein Schwerpunkt des Aufenthaltsvielecks als Schwerpunkt des Objekts (5) identifiziert wird.

7. Verfahren nach einem der Ansprüche 3 bis 6, wobei der Formtyp des Objekts (5) quaderförmig ist und in dem Schritt zum Bestimmen der Position und der Orientierung des Objekts (5) gemeinsame Schnittpunkte (S) wenigstens dreier Begrenzungslinien (A, B, C, D, E) der Aufenthaltsstreifen für das Objekt (5) als Position einer Kante des Quaders identifiziert werden.

8. Verfahren nach einem der vorangehenden Ansprüche, wobei der Formtyp des Objekts (5) zylinderförmig ist und die zumindest eine Seitenwand des Zylinders zu der Förderfläche (27) senkrecht steht und die auf der Förderfläche (27) stehende Grundfläche des Zylinders kreisförmig, elliptisch, kreissegmentförmig oder polygonal ist.

9. Vorrichtung (3) zum Bestimmen einer Position und einer Orientierung eines Objekts (5) eines bekannten Formtyps, umfassend:
eine Fördereinrichtung (25) mit einer Förderfläche (27) zur Aufnahme des Objekts (5), wobei die Fördereinrichtung (25) dazu konfiguriert ist, das Objekt (5) entlang einer Förderrichtung (F) mit einer bekannten Fördergeschwindigkeit durch einen Detektionsbereich (31) zu fördern;
eine Mehrzahl von Lichtschranken (29), deren Strahlwege den Detektionsbereich (31) unter unterschiedlichen Winkeln durchlaufen, und die jeweils dazu konfiguriert sind, einen Unterbrechungszeitpunkt, an dem die Lichtschranke (29) durch das geförderte Objekt (5) unterbrochen wird, und einen dem Unterbrechungszeitpunkt zeitlich nachfolgenden Wiederherstellungszeitpunkt, an dem die Unterbrechung der Lichtschranke (29) durch das Objekt (5) aufgehoben wird, zu bestimmen; und
eine Analyseeinheit (33), die zum Bestimmen einer Position und einer Orientierung des Objekts (5) auf der Förderfläche (27) basierend auf den Unterbrechungszeitpunkten und den Wiederherstellungszeitpunkten für die einzelnen Lichtschranken (29), der bekannten Fördergeschwindigkeit, den bekannten Strahlwegen der Lichtschranken (29) und dem Formtyp des Objekts (5) konfiguriert ist.

10. Vorrichtung nach Anspruch 9, wobei die Analyseeinheit (33) dazu konfiguriert ist, zusätzlich zu der Position und der Orientierung des Objekts (5) basierend auf den Unterbrechungszeitpunkten und den Wiederherstellungszeitpunkten für die einzelnen Lichtschranken (29), der bekannten Fördergeschwindigkeit, den bekannten Strahlwegen der Lichtschranken (29) und dem Formtyp des Objekts (5) auch eine Größe des Objekts (5) zu bestimmen.

11. Vorrichtung nach Anspruch 9 oder 10, wobei die Analyseeinheit (33) zum Bestimmen der Position und der Orientierung des Objekts (5) dazu konfiguriert ist, für jede Lichtschranke (29) basierend auf dem Unterbrechungszeitpunkt und dem Wiederherstellungszeitpunkt für die jeweilige Lichtschranke (29), der bekannten Fördergeschwindigkeit und dem bekannten Strahlweg der Lichtschranke (29) einen Aufenthaltsstreifen für das Objekt (5) zu ermitteln, innerhalb dessen das Objekt (5) liegt.

12. Vorrichtung nach Anspruch 11, wobei die Analyseeinheit (33) zum Bestimmen der Position und der Orientierung des Objekts (5) dazu konfiguriert ist, die Aufenthaltsstreifen zu überlagern und so ein Aufenthaltsvieleck zu ermitteln, innerhalb dessen das Objekt (5) liegt.

13. Vorrichtung nach Anspruch 12, wobei die Analyseeinheit (33) zum Bestimmen der Position und der Orientierung des Objekts (5) dazu konfiguriert ist, das Objekt (5) basierend auf dem bekannten Formtyp des Objekts (5) rechnerisch in das Aufenthaltsvieleck einzupassen.

14. Vorrichtung nach Anspruch 12, wobei der Formtyp des Objekts (5) derart ist, dass die Projektion des Objekts (5) in Draufsicht auf die das Objekt (5) tragende Förderfläche (27) rotationssymmetrisch oder doppelt spiegelsymmetrisch ist, und wobei die Analyseeinheit (33) zum Bestimmen der Position und der Orientierung des Objekts (5) dazu konfiguriert ist, einen Schwerpunkt des Aufenthaltsvielecks als Schwerpunkt des Objekts (5) zu identifizieren.

15. Vorrichtung nach einem der Ansprüche 11 bis 14, wobei der Formtyp des Objekts (5) quaderförmig ist und die Analyseeinheit (33) zum Bestimmen der Position und der Orientierung des Objekts (5) dazu konfiguriert ist, gemeinsame Schnittpunkte (S) wenigstens dreier Begrenzungslinien (A, B, C, D, E) der Aufenthaltsstreifen für das Objekt (5) als Position einer Kante des Quaders zu identifizieren.

16. Vorrichtung nach einem der Ansprüche 9 bis 15, wobei der Formtyp des Objekts (5) zylinderförmig ist und die zumindest eine Seitenwand des Zylinders zu der Förderfläche (27) senkrecht steht und die auf der Förderfläche (27) stehende Grundfläche des Zylinders kreisförmig, elliptisch, kreissegmentförmig oder polygonal ist.
